# EUROPÄISCHE PATENTANMELDUNG

(11) **EP 0 631 219 A1**
(43) Veröffentlichungstag der Anmeldung: **28.12.1994**
(21) Anmeldenummer: 94109633.1
(22) Anmeldetag: 22.06.1994
(51) Int. Cl.: G05D 23/19, F24F 11/00

(54) **Verfahren zur Temperatursteuerung und- regelung in einzelnen Wohn- oder Arbeitsräumen**

(30) Priorität: 28.06.1993 AT 1265/93
(71) Anmelder: Buderus Heiztechnik GmbH, D-35576 Wetzlar (DE)
(72) Erfinder: Hutsteiner, Felix, Dipl.-Ing., A-4493 Wolfern (AT); Fischer, Michael, A-4400 Steyr (AT); Heer, Michael, A-4663 Laakirchen (AT); Mayrhofer, Helmut, A-4407 Steyr-Gleink (AT)

(57) **Zusammenfassung**

Es gibt Wohn- oder Arbeitsräume, die nur zeitweise benutzt werden, bei denen sich jedoch im Laufe der Zeit ein gewisser Benutzungsrhythmus einstellt. Die Regelung nach einem starren Zeitplan würde eine Energieverschwendung darstellen und zu gewissen Zeiten nicht den sich einstellenden Bedürfnissen entsprechen. Die an sich bekannte Steuerung über Anwesenheitsmelder würde hingegen keinen ausreichenden Komfort bieten, da keine vorausschauenden Eingriffe möglich sind.

Sinn der Erfindung ist es, konstante Lebensgewohnheiten der Bewohner zu berücksichtigen und dennoch bei einem Optimum an Komfort ein Maximum an Energieersparnis zu erzielen. Das wird dadurch erreicht, daß ein eingestellter Zeitplan anhand der durch Anwesenheitsmelder erfaßten Anwesenheitszeiten an den folgenden Tagen nach einem Fuzzy-Algorithmus an die sich einstellenden Regelmäßigkeiten der Raumbenutzung angepaßt wird.

## Beschreibung

Die Erfindung betrifft ein Verfahren nach dem Oberbegriff des Patentanspruches 1.

In jedem privaten Wohnhaus gibt es Räume, die zwar an manchen Tagen häufig, an anderen Tagen dafür wieder gar nicht benutzt werden (z.B. Bügelzimmer, Arbeitszimmer, Gästezimmer).

Die üblichen Radiatoren einer Zentralheizung sind mit Thermostatventilen ausgestattet, welche dafür sorgen, daß die Raumtemperatur einen eingestellten Wert (z.B. 22 °C) nicht überschreitet, auch wenn über die Vorlauftemperatur mehr Heizleistung zur Verfügung gestellt wird als benötigt wird.

Nun wäre es zwar grundsätzlich möglich, die Raumtemperatur derartiger Nebenräume von Hand nach den tatsächlichen Benutzungserfordernissen zu steuern, aus verschiedenen Gründen funktioniert das in der Praxis aber nicht zufriedenstellend:
O Aufgrund der Trägheit einer Raumheizung dauert es zumindest 15 Minuten, bis sich der Raum merkbar erwärmt hat.
O Man wird kaum vergessen, die Heizung beim Betreten de Raumes einzuschalten, da es ja sonst unangenehm kühl ist. Ganz abgesehen von der mangelnden Bequemlichkeit vergißt man aber beim Verlassen des Raumes sehr leicht, die Raumtemperatur wieder abzusenken. Das kann aber z.B. bedeuten, daß der Raum während der nächsten 2 Tage voll beheizt wird, obwohl sich während der ganzen Zeit kein Mensch darin aufhält.

Selbst wenn die Heizungsanlage mit einer wohnraumspezifischen Steuerung, etwa nach der DE 40 09 774 C2 ausgerüstet ist, kann das besprochene Problem nicht zufriedenstellend gelöst werden, da derartige Steuergeräte nach einem starren Zeitplan arbeiten, was für den angenommenen Fall einer unregelmäßigen Raumnutzung keinen Sinn ergibt. Das gilt auch dann, wenn der Zeitplan, wie dort beschrieben, erst nach einer Lernphase von einigen Tagen festgeschrieben wird. Ab diesem Zeitpunkt sind die Schaltzeiten nämlich festgelegt.

In der DE 31 47 085 A1 wird eine Steuerung oder Regelung in Abhängigkeit von der An- oder Abwesenheit des Bewohners vorgeschlagen. Zu diesem Zweck werden Anwesenheitsmelder eingesetzt, welche die Anwesenheit von Personen ermitteln und das Meßergebnis an den Heizungsregler weitergeben. Als Melder sind beispielsweise Sensoren oder Infrarot-Bewegungsmelder geeignet. Das vorgeschlagene Verfahren arbeitet ausschließlich auf individueller Basis, d.h. beim Betreten des Raumes wird die Heizung eingeschaltet, und beim Verlassen des Raumes wird sie wieder ausgeschaltet. Dabei ist auch eine Kombination mit einer Tageszeit-, Wochentags- und Jahreszeitsteuerung vorgeschlagen worden. Das eigentliche Problem besteht aber darin, daß die Melder erst ansprechen, wenn der Raum betreten wird. Bis zu diesem Zeitpunkt ist der Raum noch kalt. Auf der anderen Seite erfolgt das Abschalten erst beim Verlassen des Raumes. Das Heizen erfolgt bis zum letzten Augenblick. Im Falle einer Luftkonditionierung durch ein Regelgerät liegen die analogen Verhältnisse vor. Es fehlt eine Berücksichtigung von eventuell konstanten Lebensgewohnheiten des Bewohners und ein vorausschauendes Eingreifen in den Steuer- bzw. Regelungsablauf.

Auch der DE 37 1 1 324 A1 ist eine Raumtemperatursteuerung bzw. -regelung unter Verwendung eines Anwesenheitsmelders zu entnehmen. In dieser wird beschrieben, wie das Signal verarbeitet wird. Es erfolgt jedoch nur eine Steuerung bzw. Regelung anhand der momentanen Gegebenheiten und nicht die Zuordnung zu einem vorgegebenen Zeitplan oder gar die Erstellung eines Zeitplanes. Somit fehlt auch hier eine Berücksichtigung von eventuell konstanten Lebensgewohnheiten des Bewohners und ein vorausschauendes Eingreifen in den Steuerungs- und Regelungsablauf.

Der Erfindung liegt die Aufgabe zugrunde, ein Verfahren zur Temperatursteuerung oder -regelung in einzelnen Arbeits- oder Wohnräumen zu schaffen, welches nicht nach einem starren Zeitplan, aber auch nicht unter Berücksichtigung momentaner Veränderungen arbeitet. Vielmehr sollen konstante Lebensgewohnheiten der Bewohner berücksichtigt und bei einem Optimum an Komfort ein Maximum an Energieersparnis erzielt werden.

Das erfindungsgemäße Verfahren besteht in der Anwendung der im Patentanspruch 1 genannten Maßnahmen.

Es wird nicht nach einem einmal einstellbaren, danach aber starren Zeitplan gearbeitet. Es erfolgt auch nicht eine Steuerung nach der momentanen, durch die Anwesenheitsmelder erfaßten An- und Abwesenheit von Personen im Raum. Vielmehr wird mit Hilfe der Information, die die Melder geben, der Zeitplan an die sich einstellenden Regelmäßigkeiten der Raumbenutzung angepaßt. Die zu den betreffenden Zeitpunkte gewünschten Raumtemperaturen werden jeweils adaptierend angefahren.

Als Grundlage für die Steuerung oder -regelung kann ein grober Zeitplan gelten. Dieser wird nach Erfahrungswerten oder anhand der über einen Tagesverlauf durch die Anwesenheitsmelder erfaßten Anwesenheitszeiten erstellt. Von Tag zu Tag können sich danach Werte ändern, die alle über die Melder erfaßt werden. Nach einer Lernphase von mehreren Tagen wird erst ein Zeitplan anhand der Mittelwerte aller Tage festgeschrieben.

Aber auch dann gilt der Zeitplan nicht als absolut festgelegt. So kann es sein, daß wohl die Aufheizung nach dem Zeitplan begonnen wurde, daß jedoch niemand zu dem festgelegten Zeitpunkt den Raum betritt. Nach einer einstellbaren Wartezeit ab dem zu erwartenden Betreten des Raumes ohne Anwesenheitsmeldung durch die Melder wird die begonnene Aufheizung wieder abgebrochen. Sollte sich diese Situation wiederholen, dann ist anzunehmen, daß sich die Gewohnheiten grundsätzlich geändert haben. Die Wartezeit verkürzt sich dann automatisch, bis sie nach mehreren Tagen schließlich den Wert 0 erreicht. Das adaptierte Anfahren der Raumtemperatur unterbleibt dann ganz. Es ist ein erneutes Festlegen des Aufheizbeginnes erforderlich.

Es ist auch möglich, daß das Verlassen des Raumes deutlich vor dem Beheizungsende erfolgt. Auch hier kann nach einer einstellbaren Wartezeit in die Temperatursteuerung bzw. -regelung eingegriffen werden, indem das Beheizen vorzeitig beendet wird. Sollte sich die Situation etwa zu demselben Zeitpunkt wiederholen, dann wird die Wartezeit immer kürzer, bis auch hier schließlich der Wert 0 erreicht ist. Die Beheizung wird unmittelbar beim Verlassen des Raumes abgeschaltet.

Ergänzend zu der vorgeschlagenen Raumtemperatursteuerung bzw. -regelung anhand eines flexiblen Zeitplanes, der sich auf die Lebensgewohnheiten der Bewohner einstellt, sollte auch eine manuelle Bedienbarkeit gewährleistet sein. Das erfolgt über einen Handschalter, mit dem auch außer- und innerhalb der durch den Zeitplan festgelegten Heizzeiten auf die Temperatursteuerung bzw. -regelung einzuwirken ist. Auch hier wird die Aufheizung selbsttätig wieder abgeschaltet, wenn nach einer einstellbaren Wartezeit niemand den Raum betritt. Die Anwesenheitsmelder erfüllen die gleiche Funktion wie zu Beginn der Aufheizung nach dem Zeitplan. bei häufigem manuellen Einschalten ohne tatsächliche Absicht, etwa durch Kinder, kann die Wartezeit sich kontinuierlich verkürzen, bis schließlich kein Starten mehr erfolgt.

Grundsätzlich läßt sich ein Zeitplan für alle Tage einer Woche, für jeweils einen Block von Wochentagen oder für einzelne Wochentage erstellen und in der angegebenen Weise über den Fuzzy-Algorithmus variieren. Somit können die Gewohnheiten, etwa am Montag, an allen identischen Tagen einer Woche, d.h. an allen folgenden Montagen, mit der entsprechenden Systematik wiederholt werden. bei Räumen, in denen an einem Block von Wochentagen oder an allen Wochentagen gleiche Verhältnisse vorliegen, werden die entsprechenden Tage als Einheit behandelt und dem Zeitplan mit den erfindungsgemäßen Variationen unterworfen.

Das Wesentliche an der Erfindung liegt nicht nur darin, daß die An- und Abwesenheit von Personen im Raum berücksichtigt werden, sondern daß dieses optimal mit einer Zeitplansteuerung kombiniert wird Auf diese Weise wird ein höchstmöglicher Komfort gewährleistet, auf der anderen Seite jedoch ein sparsamster Energieverbrauch erreicht.

Die Funktion wird im Folgenden anhand eines beigefügten Blockschaltbildes näher erläutert. Es folgt dann eine Abhandlung zu den Grundsätzen der Fuzzy-Logic unter besonderer Berücksichtigung der bei der Erfindung berücksichtigten Problematik. Diese zeigt, daß die Fuzzy-Regelung nach der beschriebenen Art eine ideale Form der Einzelraumsteuerung und -regelung darstellt. Sie kombiniert das bekannte Verfahren nach einem festgelegten Zeitplan mit einer individuellen Steuerung bzw. Regelung anhand der tatsächlichen Raumbenutzung in idealer Weise.

Grundlage der Steuerung ist dabei ein grober Zeitplan:
Das Bügelzimmer wird z.B. sicher nicht vor 16.30 Uhr und nicht nach 22.00 Uhr benutzt. Die Steuerung würde also um 16.00 Uhr einschalten.

Betritt innerhalb einer Wartezeit niemand den Raum, schaltet die Steuerung wieder ab. Mit den manuellen Auslöser kann die Heizung ebenfalls eingeschaltet werden. Auch hier wird selbsttätig abgeschaltet, wenn innerhalb der Wartezeit niemand den Raum betritt. Durch den Anwesenheitsmelder hat nun der Fuzzy-Controller die Möglichkeit, festzustellen, zu welchem Grad die Heizzyklen, welche manuell oder von der Zeitsteuerung ausgelöst wurden, auch tatsächlich genutzt werden. Aufgrund dieser Eingangsinformation kann er nun die Wartezeit, die Ein- und Ausschaltzeiten der Zeitsteuerung und durch getakteten Betrieb auch die Raumtemperatur während der Einschaltzeit verändern.

Z.B.:
- Bei häufiger manueller Fehlauslösung wird die Wartezeit verkürzt bzw. die Raumtemperatur während der Wartezeit verringert.
- Wenn die Zeitsteuerung um 16.00 Uhr einschaltet und bis 17.00 Uhr nie jemand den Raum betritt, soll der Einschaltzeitpunkt verschoben werden.

Ziel für den Fuzzy-Controller ist es, sich möglichst gut an die Lebensgewohnheiten der Wohnungsinsassen anzupassen.

Auf den folgenden Seiten:
+ Blockschaltbild
+ Beschreibung der Funktionsmodule (des Blockschaltbildes)
+ Fuzzy-Logic (mit Bezug zur Erfindung)

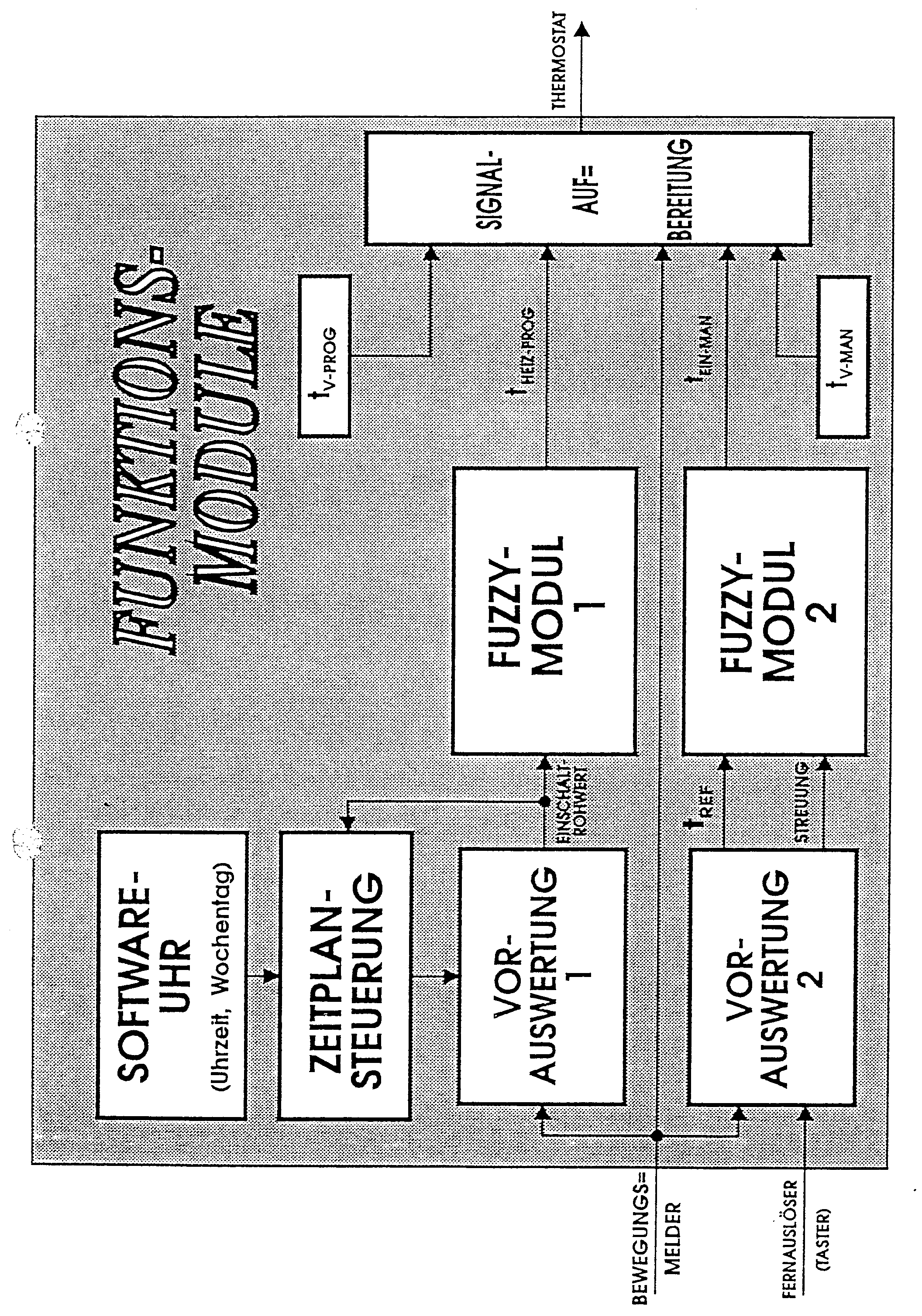

### BESCHREIBUNG DER FUNKTIONSMODULE

### Software-Uhr:

Uhrenprogramm, das Uhrzeit und Wochentag für eine Zeitplansteuerung zur Verfügung stellt.

### Zeitplansteuerung:

Die Zeitplansteuerung in Verbindung mit dem Modul Vorauswertung 1 arbeitet im Hinblick auf den Lemalgorithmus etwas anders als üblich. Der Tag ist dabei in gleiche Zeiteinheiten (1/4 h oder 1/2 h) unterteilt. Für jede Zeiteinheit eines bestimmten Wochentags wird auch ein sogen. Einschaltrohwert abgespeichert. Soll während einer derartigen Zeiteinheit die Heizung eingeschaltet sein, so ist der entsprechende Einschaltrohwert 255, soll die Heizung ausgeschaltet sein, so gilt Einschaltrohwert=0.

### Vorauswertung 1:

Dieser Funktionsblock arbeitet wie schon gesagt mit der Zeitplansteuerung zusammen. Er hat somit auch eine zentrale Bedeutung für den Lemalgorithmus der Steuerung. Wird der Bewegungsmelder in einer bestimmten Zeiteinheit ausgelöst (eine Person befindet sich im Raum), so wird der Einschaltrohwert für diese Zeiteinheit um einen bestimmten (parametrierbaren) Betrag erhöht. Wurde während einer Zeiteinheit der Raum nicht betreten, so wird der Einschaltrohwert um einen parametrierbaren Betrag emiedrigt (falls er noch größer 0 ist). Für die Einschaltrohwerte ist also jeder Wert zwischen 0 und 255 möglich.

### Fuzzy-Modul 1:

Dieser Modul ermittelt zu einem bestimmten Einschaltrohwert eine Zeitr t_{Heiz-prog}. Diese Zeit legt fest, wieviel von einer Zeiteinheit tatsächlich geheizt wird.

| | | |
|---|---|---|
| t_{Heiz-prog} = 0 | ... | Es wird gar nicht eingeheizt. |
| t_{Heiz-prog} = Länge einer Zeiteinheit | ... | Es wird während der ganzen Zeiteinheit geheizt. |

### Vorauswertung 2:

Dieser Funktionsblock ermittelt die Kenngrößen t_{ref} und Streuung.
- t_{ref}:: Zeit zwischen dem Auslösen des manuellen Femauslösers und dem Betreten des Raumes durch eine Person.
- Streuung:: Maß für die Strerung der letzen t_{ref}.

### Fuzzy-Modul 2:

Dieser Modul ermittelt in Abhängigkeit von den Eingangsgrößen t_{ref} und Streuung die Zeit t_{Ein-man}. Das ist jene Zeit, für die nach Auslösen des manuellen Femauslösers die Heizung eingeschaltet wird.

### Signalaufbereitung:

Dieser Modul erzeugt aus einer Reihe von Eingangsgrößen das binäre Ausgangssignal, das über ein Thermostatventil den Heizkörper steuert. Es kann damit der Heizkörper eingeschaltet (Thermostat arbeitet im normalen Regelbetrieb) oder abgeschaltet werden. Neben den bereits besprochenen Eingangsgrößen für die Signalaufbereitung gibt es noch die parametrierbaren Werte t_{V-prog} und t_{V-man}. Um die Zeit t_{V-prog} wird der Zeitplan verschoben. Ist z.B. für 17h ein Einschaltzeitpunkt programmiert und t_{V-prog} = 30 min, dann wird bereits um 16h30 eingeschaltet. t_{V-man} stellt einen Anfangswert für t_{Ein-man} dar. Während des Programmablaufs wird dieser Wert von Fuzzy-Modul 2 überschrieben.

### Fuzzy-Logic

Zuerst mußte festgestellt werden, ob das beschriebene Problem mit einem Fuzzy-Algorithmus zu lösen ist.

Das ursprüngliche Anwendungsgebiet von Fuzzy-Logic war, nicht exakte oder unvollständige Datensätze (z.B. Bildverarbeitung, Spracherkennung) zu beschreiben um sie maschinell verarbeiten zu können.

Heute wird Fuzzy-Logic hauptsächlich in der Steuer- und Regelungstechnik eingesetzt, und zwar vor allem dort, wo mit herkömmlichen Reglern keine guten Ergebnisse erreicht werden.

Herkömmliche Regler basieren auf mathematischen Modellen. Will man nun einen Regler dimensionieren, so benötigt man vorher eine mathematische Beschreibung des Systems, das gesteuert bzw. geregelt werden soll. Kann ein solches mathematisches Modell nur schwer gefunden werden, so steigt man auf Fuzzy-Logic um. Bei Fuzzy-Logic, zu deutsch verschwommen, unscharf, wird das Verhalten des Reglers nicht durch Formeln, sondern durch Regelsätze bestimmt. Die Auswahl eines geeigneten Regelsatzes erfolgt intuitiv, experimentell können die Regeln an das jeweilige Problem angepaßt werden.

Bei unserem Projekt kommt ein Fuzzy-Algorithmus zweimal zum Einsatz:

### 1. Berechnung der Einschaltzeit nach manuellem Auslösen der Steuerung

### Eingangsgrößen:

· Referenzzeit
   Das ist die Zeit zwischen dem manuellen Auslösen und dem tatsächlichen Betreten des Raumes durch einen Benutzer.
· Streuung
   Diese Größe liefert eine Aussage darüber, ob die letzten Referenzzeiten etwa gleich groß sind, oder ob ihre Größe einer entsprechenden Streuung unterliegt. Je größer die Streuung der Referenzzeit ist, desto geringer soll ihr Einfluß auf die Ausgangsgröße sein.

### Ausgangsgröße:

· Einschaltzeit
Das ist jene Zeit, während der die Heizung nach dem manuellen Auslösen eingeschaltet wird.

### 2. Automatische Anpassung des Zeitprogrammes an die Benutzungsfrequenz des Raumes.

Diese Funktion ist im Anhang der Bedienungsanleitung näher erklärt.

Die Eingangssignale, die der Regler zu Verfügung gestellt bekommt, sind unregelmäßig und daher nur schwer durch ein herkömmliches mathematisches Modell zu beschreiben. Man weiß im Vorhinein noch nicht, wann zum Beispiel die manuelle Auslösung betätigt wird und wann eine Person danach den Raum betritt. Die Ansteuerung des Thermostats und die Steuerung des Lernalgorithmuses hat aber durch die Zeit zwischen manueller Auslösung und Betreten des Raumes zu erfolgen. Daher ist in diesem Fall ein Fuzzy-Regler vorteilhaft. Auch die Gewichtung der verschiedenen Differenzzeiten ist mit einem Fuzzy-Algorithmus besser zu erreichen. Durch einen Fuzzy-Regler können zum Beispiel nichtlinearitäten eingebaut werden. Das heißt, wenn die Differenzzeiten noch sehr klein sind, kann die Auswirkung auf den Regler zum Beispiel noch eher groß sein. Im Gegensatz dazu kann, wenn die Differenzzeiten eher groß sind, die Auswirkung auf den Regler eher kleiner sein. Im Bereich zwischen kleinen und großen Differenzzeiten kann die Auswirkung auf das Ventil ähnlich einer Exponentialfunktion ablaufen, ohne daß der Regelalgorithmus aufwendiger wird. Es müssen lediglich die Fuzzy-Sets geändert werden.

Es wurde also festgestellt, daß ein Fuzzy-Regler in unserem Anwendungsfall einem herkömmlichen Regler vorzuziehen ist.

Die Programmierung in Pascal ermöglichte dann die Umsetzung der gewonnen Erkenntnisse in die Praxis.

## Patentansprüche

1. Verfahren zur Temperatursteuerung bzw. -regelung in einzelnen Wohn- oder Arbeitsräumen mit einer Beheizung durch trägheitsarme Heizelemente wie Wasserradiatoren, Elektroradiatoren oder Heizstrahler bzw. mit einer Luftkonditionierung durch Klimageräte unter Anwendung geeigneter, die Anwesenheit von Personen im Raum erfassender, auf die Temperatursteuerung bzw. -regelung einwirkender Anwesenheitsmelder wie Sensoren oder Infrarot-Bewegungsmelder, dadurch gekennzeichnet, daß ein eingestellter Zeitplan zur Temperatursteuerung bzw. -regelung anhand der durch die Anwesenheitsmelder erfaßten Anwesenheitszeiten an den folgenden Tagen nach einem Fuzzy-Algorithmus an die sich einstellenden Regelmäßigkeiten der Raumbenutzung angepaßt wird, und daß die zu den betreffenden Zeitpunkten gewünschten Raumtemperaturen adaptierend angefahren werden.

2. Verfahren nach Anspruch 1,
dadurch gekennzeichnet, daß das erste Einstellen des Zeitplanes anhand der über einen Tagesverlauf erfaßten Anwesenheitszeiten erfolgt und, daß dieser Zeitplan nach einer Lernphase von mehreren Tagen anhand der Mittelwerte aller Tage festgeschrieben wird.

3. Verfahren nach den Ansprüchen 1 und 2,
dadurch gekennzeichnet, daß die nach dem festgeschriebenen Zeitplan begonnene Aufheizung bei einem Nichtbetreten während einer einstellbaren Wartezeit infolge Nichtansprechens des Anwesenheitsmelders selbsttätig abgebrochen wird.

4. Verfahren nach den Ansprüchen 1 bis 3,
dadurch gekennzeichnet, daß bei einem wiederholten Nichtbetreten des Raumes während der Wartezeit sich diese Zeit selbsttätig verringert und nach mehreren Tagen schließlich den Wert 0 erreicht, wodurch das adaptierte Anfahren der Raumtemperatur unterbleibt.

5. Verfahren nach den Ansprüchen 1 und 2,
dadurch gekennzeichnet, daß bei einem vorzeitigen Verlassen des beheizten Raumes nach einer einstellbaren Wartezeit ohne erneutes Ansprechen des Anwesenheitsmelders die Beheizung beendet wird.

6. Verfahren nach Anspruch 5,
dadurch gekennzeichnet, daß sich bei einem wiederholten Verlassen des beheizten Raumes etwa um dieselbe Zeit die Warezeit selbsttätig verringert und nach mehreren Tagen schließlich den Wert 0 erreicht, so daß die Beheizung dann unmittelbar beim Verlassen des Raumes beendet wird.

7. Verfahren nach den Ansprüchen 1 und 2,
dadurch gekennzeichnet, daß über einen Handschalter auch außer- und innerhalb der durch den Zeitplan festgelegten Heizzeiten auf die Temperatursteuerung bzw. - regelung einzuwirken ist.

8. Verfahren nach Anspruch 7,
dadurch gekennzeichnet, daß bei einem Einschalten durch den Handschalter und einem Nichtbetreten des Raumes während einer einstellbaren Wartezeit bei Nichtansprechen des Anwesenheitsmelders die begonnene Aufheizung abgeschaltet wird .

9. Verfahren nach Anspruch 1,
dadurch gekennzeichnet, daß der zu erstellende Zeitplan für alle Tage einer Woche, für jeweils einen Block, von Wochentagen oder für einzelne Wochentage Gültigkeit hat.
